(19) Europäisches Patentamt / European Patent Office / Office européen des brevets

(11) **EP 2 219 335 A1**

(12) **EUROPEAN PATENT APPLICATION**
published in accordance with Art. 153(4) EPC

(43) Date of publication:
**18.08.2010 Bulletin 2010/33**

(51) Int Cl.:
**H04L 27/26** (2006.01)

(21) Application number: **07866358.0**

(22) Date of filing: **13.12.2007**

(86) International application number:
**PCT/ES2007/000728**

(87) International publication number:
**WO 2009/074693 (18.06.2009 Gazette 2009/25)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
• **Sidsa (Semiconductores Investigación Y Diseño SA)**
  **28760 Trescantos, Madrid (ES)**
• **Insenser Farré, José María**
  **28760 Trescantos, Madrid (ES)**
• **Hernanz Chiloeches, Daniel**
  **28760 Trescantos, Madrid (ES)**
• **Virseda Morena, Miguel**
  **28760 Trescantos, Madrid (ES)**
• **Pardo Vidal, Carlos**
  **28760 Trescantos, Madrid (ES)**
• **Lacadena García-Gallo, Ignacio**
  **28760 Madrid (ES)**

(72) Inventors:
• **INSENSER FARRÉ, José María**
  **28760 Trescantos, Madrid (ES)**
• **HERNANZ CHILOECHES, Daniel**
  **28760 Trescantos, Madrid (ES)**
• **VIRSEDA MORENA, Miguel**
  **28760 Trescantos, Madrid (ES)**
• **PARDO VIDAL, Carlos**
  **28760 Trescantos, Madrid (ES)**
• **LACADENA GARCÍA-GALLO, Ignacio**
  **28760 Madrid (ES)**

(74) Representative: **Gonzalez-Alberto Rodriguez, Natalia et al**
**Garrigues**
**Hermosilla, 3**
**28001 Madrid (ES)**

(54) **SIGNALLING METHOD AND APPARATUS USING FREQUENCY PILOTS BASED ON COMPLEMENTARY SEQUENCES**

(57) The invention relates to a signalling method using orthogonal frequency division multiplexing (OFDM), based on a preamble comprising N dedicated carriers (frequency pilots), the position and modulation of which is defined by one or more concatenated complementary sequences of length N. Complementary sequences are those for which the sum of the autocorrelations thereof is zero except for zero shift, i.e. a Krönecker delta. The main purpose of said preamble is to signal the basic properties of the transmitted signal and to provide a first estimation at the moment of time and frequency synchronisation. The preamble is multiplexed or sequenced temporally with the transmitted data using OFDM prior to the application of the inverse Fourier transform by the inverse fast Fourier transform (IFFT) block.

FIG.1

**Description**

Field of the Art

The present invention relates to the signalling method conceived for the first stages of reception and it allows obtaining information relating to the transmission quickly and with little or no knowledge of the received signal. Signalling using OFDM is commonly performed using dedicated carriers mixed at the frequency level with the data. In order to access said information, a prior time interval is required to achieve time and frequency synchronisation, to estimate the transmission channel distortion and to equalize the received signal. In this case, the signalling (or part of it) is temporally separated from the remaining data in the form of a preamble. Said preamble can be detected and decoded even in the presence of a low signal to noise ratio (SNR), distortion in the channel due to Doppler effects, echoes produced by single frequency networks (SFN), etc., and time and/or frequency shifts.

Prior Art

In communications systems, the transmitted signal is distorted by distortion effects of the medium, thermal noise in the receiver and the effects caused by poor time and frequency synchronisation. Part of the transmitted information is used for transmission parameters signalling (TPS), such as for example, the number of carriers (FFT mode) and guard interval (GI) of an OFDM system, the type of mapping used (constellation) or the version of the protocol used. This information is extremely important and must be adequately received to be able to decode the rest of the received information. As a result, signalling must be transmitted such that it allows a very robust detection, [see ETSI EN 300 744: "Digital Video Broadcasting (DVB); Framing structure, channel coding and modulation for digital terrestrial television"].

OFDM technology has been under the protection of several patents for years, such as [Gledhill, V.V. *et al.*, "Reception of Orthogonal Frequency Division Multiplexed Signals" US19935345440] or [Saito, M., "Method and Apparatus for Digital Signal Transmission Using Orthogonal Frequency Division Multiplexing" US19935406551].

Several methods have recently been proposed for optimal estimation using pilots in the frequency domain, such as [Yeh, CS.; Lin, Y. "Channel Estimation using Pilot Tons in OFDM Systems", IEEE Trans. On Broadcasting, Vol. 45, No.: 4, Dec 1999. pp. 400-409]. There are also methods for synchronisation using pilots, such as [Minn, H., Bhargava, V.K., Letaief, K.B. "A Robust Timing and Frequency Synchronization for OFDM Systems"].

In the aforementioned references, the estimation and synchronisation are steps prior to obtaining the signalling information which is transmitted together with the data. A reference that is closer to what is sought with this patent is [Chang-Ho, S. *et al.* "Apparatus and Method for Generating Preamble Sequences in an OFDM Communication System", US2004252777]. In this case, a preamble is proposed for frame (not signalling) synchronisation, the main objective of which is to minimize the peak to average power ratio (PAPR).

In the two previous references, sets having two components (K=2), also referred to as Golay sequences [MARCEL J.E. Golay "Complementary Series". IRE Transactions on Information Theory, April 1961, pp. 82-87.], are used for synchronisation, but it is possible to work with K>2 [C.C. Tseng, C.L. Liu, "Complementary Sets of Sequences", IEEE Trans. Inform. Theory, Vol. IT-18, No 5, pp. 644-651, Sept. 1972.].

The main property of the sets of complementary sequences or SCS is:

$$\sum_{i=0}^{K-1} r_{a_i a_i}[n] = KN\delta[n]$$

<1>

wherein $r_{xx}$ is the aperiodic autocorrelation of x. The sum of the autocorrelation of all the sequences of the set is equal to KN for n=0 and 0 for n≠0 (Krönecker delta multiplied by the factor KN), where N is the length of said sequences.

Another interesting property is that there are K sets of sequences which are mutually uncorrelated (also referred to as orthogonal sets):

$$\sum_{i=0}^{K-1} r_{a_i b_i}[n] = 0 \ , \forall n$$

<2>

This allows K sets to be transmitted simultaneously.

The generation and detection of Golay sequences can be done efficiently by applying the systems defined in [S.Z. Budisin. "Efficient Pulse Compressor for Golay Complementary Sequences", Elec. Lett. Vol. 27, No. 3, pp. 219-220, 31st Jan., 1991.] and [Popovic, B.M. "Efficient Golay correlator". Electronics Letters, Volume: 35, Issue: 17, 19 Aug. 1999 Pages: 1427-1428.] . These structures are only valid for K=2. For generation with K>2, an optimal algorithm is described in [X. Huang and Y. Li, "Scalable Complete Complementary Sets of Sequences", IEEE Globecom 2002, Taipei, Taiwan, Nov 17.21, 2002]. An optimal algorithm for K≥2 is described in [José Maria Insenser *et al*. "*Método y Sistema de Estimación de Canales de Múltiple Entrada y Múltiple Salida"* (Method and System for Multiple Input and Multiple Output Channel Estimation) Spanish patent application no. P200601942, 20 July 2006.]

The method herein described allows using a preamble structure for signalling, in addition to allowing estimation and synchronisation. It is based on the use of different sequences for defining distribution and modulation and allows working with sets larger than two (K≥2).

Description of the Invention

As explained above, the main properties of the SCS are:

$$\sum_{i=0}^{K-1} r_{a_i a_i}[n] = KN\delta$$

<3>

where $r_{xx}$ is the aperiodic autocorrelation of x. The sum of the autocorrelation of all the sequences of the set is equal to a Krönecker delta multiplied by the factor KN.

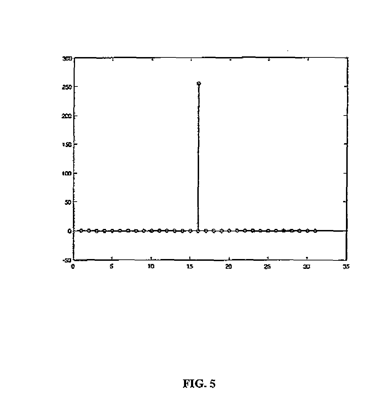

The interesting property is that there are K sets of sequences which are mutually uncorrelated (also referred to as orthogonal sets) (see Figure 5):

$$\sum_{i=0}^{K-1} r_{a_i b_i} = 0$$

<4>

These properties are maintained when the values of sequences a and b belong to the set {1,-1}. If said frequencies are amplified by a factor F, the properties are maintained but with a gain F. The problem occurs when an amplitude offset is applied to said sequences; for example, the values of said sequences belong to set {1,0}. In said case there will be an integration effect on the result of the correlation.

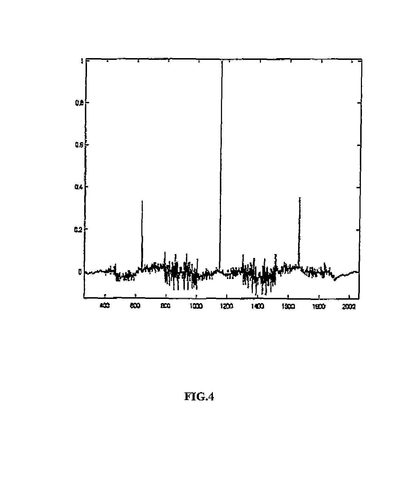

These ideal properties of the sequences are not maintained if the sum is not performed and only the correlation is performed. Said correlation has a defined maximum but side lobes appear (the values close to the peak are not nil). This property is maintained if the autocorrelated sequence comprises two or more concatenated complementary sequences of the same or different length. Said effect can be seen in Figure 4. In said figure, the correlation is done for power, but to prevent the integration effect once passed to power (or to absolute value or modulus) the amplitude offset is eliminated from the received sequence to achieve a mean close to zero and correlates with the reference signal at values {1,-1}.

Using values {1,-1} allows simplifying the correlation and basing it on addition and subtraction operations.

This technique is typically used in the time domain (Direct Sequence Spread Spectrum), but in this case, its use in the frequency domain (OFDM) is considered and, therefore, it is used in the transmitter prior to the Inverse Fast Fourier transform (IFFT).

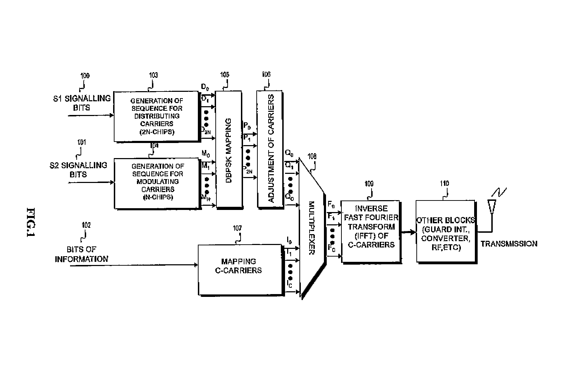

According to the block diagram of Figure 1, it can be seen that two independent signalling fields (S1 and S2) can be used. One is for selecting the sequence that is used for distributing active carriers and the other one is for selecting the sequences that are used for the DBPSK mapping or modulation of the active carriers. In the first case, a sequence or a concatenation of sequences of the same or different length 2*N is generated, N active carriers and N non-active carriers being obtained. The N active carriers are mapped out to a DBPSK constellation with a sequence or a concatenation of sequences of length N. It is possible that the carrier distribution sequence does not have the same number of active as non-active carriers. In said case, the length of the sequence defining the mapping must be chosen in accordance with the number of active carriers. In any case, the optimal choice for the sequences defining the mapping is to use K sets of length N and concatenate the K sequences of length N to generate the sequence that is used for modulation. K*N has to be equal to the number of active carriers to be mapped.

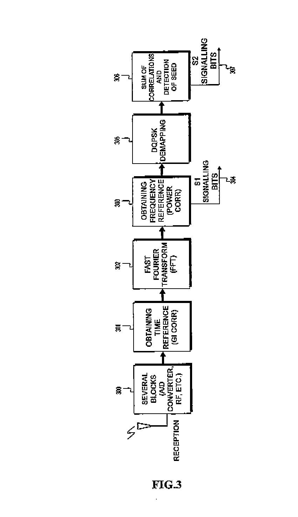

S1 signalling is based on the correlation peak being maximum in the receiver (Figure 3) when it correlates with the same sequence that was transmitted. In the event that another sequence is used for correlation, the maximum peak of the result of the correlation will be lower. This can be used to perform different correlations which allow detecting the transmitted sequence and signalling as many options as number of sequences can be transmitted. In this case it is worth searching for sets of sequences with a low cross-correlation. It is also possible to use the all-or-nothing detection option, i.e., searching for a peak which coincides with the preamble and if said peak is not found, signalling that the analysed signal is not the signal sought. This peak can be used for generating a frequency reference which allows indexing the carriers for a subsequent DBPSK detection. All this information is frequency coded and therefore, the first step in the receiver is to detect the preamble in the time domain and pass it through the FFT. Said detection could be done using a temporal correlation of the signal shifted enough so that the guard intervals coincide. Said guard intervals are copies of the transmitted signal (with or without phase shift) transmitted at different instants. Said operation is known as guard interval-correlation (GI-C).

S2 signalling is based on detecting the transmitted set by taking advantage of the fact that the other sets are completely orthogonal (nil sum of cross-correlations). As many options as complementary sets are used can be signalled. The signalling capacity using the complementary properties of these sets is K=N.

Brief Description of the Drawings

Figure 1 shows a schematic block diagram of the transmitting system. The different parts it comprises are described below:

100. S1 signalling data coded in the sequence used to distribute the carriers. 300. It can be used to indicate the type of transmission protocol used.
101. S2 signalling data coded in the sequence used to modulate the carriers. They can be used to indicate the OFDM mode and the Guard interval.
102. Other information (and signalling) bits coded in OFDM symbols different from those of the preamble.
103. Generator of complementary sequences of length 2N using S1 as a seed for their generation. The binary result of each of the chips of the sequence is 1 or 0. The positions at 1 indicate active carriers and at 0 they indicate non-active carriers.
104. Generator of complementary sequences of length N using S2 as a seed for their generation. The binary result of each of the chips of the sequence is 1 or 0. These values are used for differential binary phase shift keying (DBPSK).
105. DBPSK mapping of the active carriers using the keying sequence leaving the non-active carriers at zero.
106. Filling the 2N carriers with non-active carriers until completing the C carriers of the OFDM symbol.
107. Mapping the information bit carriers.
108. OFDM symbols multiplexer for inserting the preamble every certain data symbols.
109. Inverse Fourier transform for converting the frequency carriers of the OFDM symbols into time symbols.
110. Other typical blocks of an OFDM transmission chain such as the insertion of the guard interval (GI), digital-to-analog converter, radio frequency (RF) stages, filters, etc., or any other method which allows introducing time variations or extensions in the signal to be transmitted.

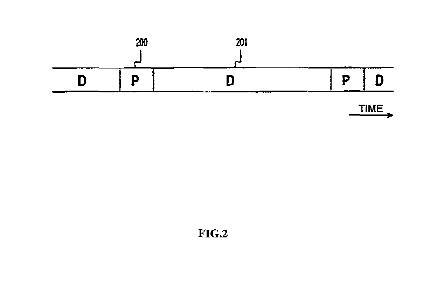

Figure 2 shows the framework of the transmission signal in the time domain. The different parts it comprises are described below:

200. Preamble periodically inserted in the transmitted signal (P)
201. Remaining transmitted data (D)

Figure 3 shows a schematic block diagram of the receiving system receiver focusing only on the part for detecting the preamble. The different parts it comprises are described below:

300. Typical blocks for receiving, such as radio frequency stages and digital-to-analog converter.
301. Obtaining the time reference using the guard interval - correlation operation of the preamble. Said reference can be used as the first reference of the presence of a preamble and allows positioning the time window of the OFDM symbol.
302. Fourier transform for passing to the frequency domain and recovering the carriers.
303. Power correlation for obtaining a first frequency reference for later stages.
304. The detection can be used for detecting or not the presence of the signal sought (S1 = 1 bit) or using several correlations for detecting more information such as different versions of the protocol used (S1>1 bit).
305. The active carriers are detected using the time reference by detecting the phase shifts (DBPSK)

306. The binary sequences resulting from the detection of the active carriers are correlated and added up (SoAC - Sum of Autocorrelations) with the different possible seeds used for generating the modulation sequences.
307. It is possible to discriminate between the different seeds used and detect the S2 signalling bits using several SoAC operations.

Figure 4 shows the result of the power correlation using two concatenated complementary sequences of length 512 and 256.
Figure 5 shows the result of the sum of the autocorrelations of 16 complementary sequences of length 16 (Krönecker delta) and the sum is cross-correlated with the 15 completely orthogonal sets (nil cross-correlation).

**Claims**

1. A communications system (transmitting and receiving apparatus) wherein a preamble structure comprising N dedicated carriers (frequency pilots) is used, the position and/or modulation/mapping of which are defined by one or more complementary sequences, complementary sequences being those for which the sum of the autocorrelations thereof is zero except for the zero shift, wherein the choice of the sequence for distributing the carriers is used for signalling information relating to the communications system and/or the choice of the sequence for mapping the carriers is used for signalling information relating to the communications system.

2. The system according to claim 1, wherein the generated preamble is periodically inserted temporally in the transmitted signal in a sequential manner with the transmitted data.

3. The system according to claim 1, wherein orthogonal sets of complementary sequences, i.e., sets of sequences the sum of autocorrelations of which is always nil, are used for mapping or positioning the dedicated carriers or active carriers within the constellation.

4. The system according to claim 1, wherein binary constellations based on binary phase shift keying (BPSK) are used.

5. The system according to claim 1, wherein binary constellations based on differential binary phase shift keying (DBPSK) are used.

6. The system according to claim 1, wherein quadrature constellations based on quadrature phase shift keying (QPSK) are used.

7. The system according to claim 1, wherein quadrature constellations based on differential quadrature phase shift keying (DQPSK) are used.

8. The system according to claim 1, wherein temporal copies of the preamble, phase shifted or not (guard intervals), are added to the preamble to allow performing time correlations in the time domain in the receiver and/or minimizing intersymbol interference.

9. The system according to claim 1, wherein the distribution and/or the modulation/mapping of the sequences is optimized for being transmitted in single input - single output (SISO) systems.

10. The system according to claim 1, wherein the distribution and/or the modulation/mapping of the sequences is optimized for being transmitted in single input - multiple output (SIMO) systems.

11. The system according to claim 1, wherein the distribution and/or the modulation/mapping of the sequences is optimized for being transmitted in multiple input - single output (MISO) systems.

12. The system according to claim 1, wherein the distribution and/or the modulation/mapping of the sequences is optimized for being transmitted in multiple input - multiple output (MIMO) systems.

13. The system according to claim 1, wherein the receiver uses several correlators in parallel.

14. The system according to claim 1, wherein the receiver uses several correlators in series.

15. The system according to claim 1, wherein the receiver uses guard interval correlations in the time domain according to claim 10 for detecting the preamble using shifting and multiplications with accumulation in a windowed manner (guard interval correlation).

16. The system according to claim 1, wherein the receiver performs correlations of the signal in power, modulus or absolute value in the frequency domain for detecting the distribution of carriers and/or obtaining a frequency reference, and the information coded therein.

17. The system according to claim 1, wherein the receiver performs in the frequency domain the sum of correlations of the signal coded in the mapping according to claims 4, 5 ,6 or 7 for detecting information coded therein.

18. The system according to any of claims 15, 16 and 17, wherein peak detection algorithms and/or comparisons between the detected peaks are used for obtaining time and/or frequency references and for obtaining the information coded in the transmission.

19. The system according to claim 1, wherein the sequence used for distributing carriers comprises two or more concatenated complementary sequences belonging to a set or not.

20. The system according to claim 1, wherein the sequence used for the modulation or mapping of the constellation of active carriers comprises two or more concatenated complementary sequences belonging to a set or not.

21. A transmitting apparatus for a communications system (transmitting and receiving apparatus) wherein a preamble structure comprising N dedicated carriers (frequency pilots) is used, the position and/or modulation/mapping of which are defined by one or more complementary sequences, complementary sequences being those for which the sum of the autocorrelations thereof is zero except for the zero shift, wherein the choice of the sequence for distributing the carriers is used for signalling information relating to the communications system and/or the choice of the sequence for mapping the carriers is used for signalling information relating to the communications system.

22. A receiving apparatus for a communications system (transmitting and receiving apparatus) wherein a preamble structure comprising N dedicated carriers (frequency pilots) is used, the position and/or modulation/mapping of which are defined by one or more complementary sequences, complementary sequences being those for which the sum of the autocorrelations thereof is zero except for the zero shift, wherein the choice of the sequence for distributing the carriers is used for signalling information relating to the communications system and/or the choice of the sequence for mapping the carriers is used for signalling information relating to the communications system.

23. A method for a communications system (transmitting and receiving apparatus) wherein a preamble structure comprising N dedicated carriers (frequency pilots) is used, the position and/or modulation/mapping of which are defined by one or more complementary sequences, complementary sequences being those for which the sum of the autocorrelations thereof is zero except for the zero shift, wherein the choice of the sequence for distributing the carriers is used for signalling information relating to the communications system and/or the choice of the sequence for mapping the carriers is used for signalling information relating to the communications system.

FIG.1

FIG.2

FIG.3

RECEPTION

| 300 | 301 | 302 | 303 | 305 | 306 |
|---|---|---|---|---|---|
| SEVERAL BLOCKS (A/D CONVERTER, RF, ETC.) | OBTAINING TIME REFERENCE (GI CORR) | FAST FOURIER TRANSFORM (FFT) | OBTAINING FREQUENCY REFERENCE (POWER CORR) | DQPSK DEMAPPING | SUM OF CORRELATIONS AND DETECTION OF SEED |

S1 SIGNALLING BITS
304

S2 SIGNALLING BITS
307

FIG.4

FIG. 5

11

# INTERNATIONAL SEARCH REPORT

| | International application No. |
|---|---|
| | PCT/ ES 2007/000728 |

**A. CLASSIFICATION OF SUBJECT MATTER**

*H04L 27/26* (2006.01)

According to International Patent Classification (IPC) or to both national classification and IPC

**B. FIELDS SEARCHED**

Minimum documentation searched (classification system followed by classification symbols)

H04L27/+, H04L7/00, H03M13/00, H04B1/00, H04J11/00, H04B7/00

Documentation searched other than minimum documentation to the extent that such documents are included in the fields searched

Digital Video Broadcasting Project

Electronic data base consulted during the international search (name of data base and, where practicable, search terms used)

CIBEPAT,EPODOC,WPI

**C. DOCUMENTS CONSIDERED TO BE  RELEVANT**

| Category* | Citation of document, with indication, where appropriate, of the relevant passages | Relevant to  claim No. |
|---|---|---|
| X | US 2004252777 A1 (SAMSUNG ELECTRONICS CO) 16.12.2004, Titulo, abstract, paragraphs 3, 9, 16,29,41 53 and 75 figures 1,2, 4 , 5 and 16 | 1-7,10-22 |
| X | WO 03075500 A2 (ALVARION LTD ; CHAYAT NAFTALI ; KAITZ TAL) 12.09.2003, Abstract; page 6 line 30-page 9 line 30 | 1-7,10-22 |
| A | US 2005147186 A1 (FUNAMOTO et al.) 07.07.2005, the whole document. | 1-22 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 31.July.2008        (31.07.2008) | (06-08-2008) |
| Name and mailing address of the ISA/ O.E.P.M. Paseo de la Castellana, 75 28071 Madrid, España. Facsimile No.   34 91 3495304 | Authorized officer J. Santaella Vallejo Telephone No. +34 91 349 32 81 |

Form PCT/ISA/210 (second sheet) (April 2007)

## INTERNATIONAL SEARCH REPORT

Information on patent family members

International application No.

PCT/ ES 2007/000728

| Patent document cited in the search report | Publication date | Patent family member(s) | Publication date |
|---|---|---|---|
| US 2004202103 A | 14.10.2004 | KR 20040087622 A<br>US 7366090 B | 14.10.2004<br>29.04.2008 |
| US 2005152326 A | 14.07.2005 | AU 2005207364 A<br>WO 2005071911 A<br>CA 2551988 A<br>AR 047378 A<br>EP 1706976 A<br>EP 20050705174<br>NO 20063570 A<br>KR 20060107574 A<br>CN 1930841 A<br>BR P<br>JP 2007518363 T<br>RU 2323537 C | 04.08.2005<br>04.08.2005<br>04.08.2005<br>18.01.2006<br>04.10.2006<br>07.01.2005<br>06.10.2006<br>13.10.2006<br>14.03.2007<br>02.05.2007<br>05.07.2007<br>27.04.2008 |
| ES 2164613 AB | 16.02.2002 | WO 0217585 A<br>AU 5228601 A<br>EP 1311095 AB<br>EP 20010925586<br>BR 0113454 A<br>US 2003179811 A<br>CN 1448014 A<br>CN 1222142 C<br>JP 2004515935 T<br>ZA 200301461 A<br>HK 1059695 A<br>RU 2280957 C<br>AT 348469 T<br>DK 1311095 T<br>DE 60125190 T | 28.02.2002<br>04.03.2002<br>14.05.2003<br>27.04.2001<br>15.07.2003<br>25.09.2003<br>08.10.2003<br>05.10.2005<br>27.05.2004<br>13.06.2005<br>30.06.2006<br>27.07.2006<br>15.01.2007<br>10.04.2007<br>27.09.2007 |

Form PCT/ISA/210 (patent family annex) (April 2007)

## REFERENCES CITED IN THE DESCRIPTION

### Patent documents cited in the description

- US 19935345440 A
- US 19935406551 A
- US 2004252777 A
- ES P200601942

### Non-patent literature cited in the description

- **Yeh, CS. ; Lin, Y.** Channel Estimation using Pilot Tons in OFDM Systems. *IEEE Trans. On Broadcasting,* December 1999, vol. 45 (4), 400-409
- **MARCEL J.E. Golay.** Complementary Series. *IRE Transactions on Information Theory,* April 1961, 82-87
- **C.C. Tseng ; C.L. Liu.** Complementary Sets of Sequences. *IEEE Trans. Inform. Theory,* September 1972, vol. IT-18 (5), 644-651
- **S.Z. Budisin.** Efficient Pulse Compressor for Golay Complementary Sequences. *Elec. Lett.,* 1991, vol. 27 (3), 219-220
- **Popovic, B.M.** Efficient Golay correlator. *Electronics Letters,* 19 August 1999, vol. 35 (17), 1427-1428
- **X. Huang ; Y. Li.** Scalable Complete Complementary Sets of Sequences. *IEEE Globecom 2002,* 17 November 2002